# EUROPEAN PATENT APPLICATION

(11) **EP 3 909 424 A1**
(43) Date of publication of application: **17.11.2021**
(21) Application number: 20738472.8
(22) Date of filing: 09.01.2020
(51) Int. Cl.: A01K 61/60, G06T 7/00, H04N 5/225, H04N 5/232, H04N 5/235, H04N 7/18

(54) **FISH MONITORING SYSTEM AND CAMERA UNIT**

(30) Priority: 11.01.2019 JP 2019003327
(71) Applicant: FullDepth Co., Ltd., Taito-ku Tokyo 111-0051 (JP)
(72) Inventor: SATO, Tomoki, Tokyo 105-0022 (JP)
(74) Representative: Bandpay & Greuter
(86) International application number: PCT/JP2020/000414
(87) International publication number: WO 2020/145336

(57) **Abstract**

A fish monitoring system is a system for monitoring fish raised in a fish preserve, which includes camera unit 1, monitoring server 3, and user terminal 4. Camera unit 1 of the fish monitoring system is configured to send an image captured by a camera to monitoring server 3. Monitoring server 3 of the fish monitoring system is configured to detect a dead fish or a dying fish based on a captured image, and to notify user terminal 4 of detection of a dead fish or a dying fish.

## Description

### Technical Field

The present invention relates to a system for monitoring fish raised in a fish preserve.

### Background Art

Patent Document 1 discloses an underwater monitoring system that includes an underwater monitoring unit for capturing an underwater image, which is placed on the surface of water, and a personal computer for remotely controlling the underwater monitoring unit. The underwater monitoring system disclosed in Patent Document 1 enables a user, by use of the personal computer, to view an underwater image captured by the underwater monitoring unit.

### Prior Art Document

### Patent Document

Patent Document 1: JP 2003-37755 A1

### Summary of the Invention

### Problems to be Solved by the Invention

An object of the present invention is to monitor fish raised in a fish preserve.

### Means for Solving the Problems

To solve the problem described above, a fish monitoring system according to the present invention is a system for monitoring fish raised in a fish preserve, comprising: at least one camera unit fixed at a bottom of the fish preserve; a monitoring server connected to the at least one camera unit via a communication network; a user terminal connected to the monitoring server via the communication network, wherein: the at least one camera unit includes a camera having a lens that is to be directed to a water surface of the fish preserve, and a sending unit configured to send an image captured by the camera to the monitoring server; and the monitoring server includes a detection unit configured to detect a dead fish or a dying fish based on an image captured by the camera, and a notification unit configured, when the detection unit detects a dead fish or a dying fish, to notify the user terminal of the detection of a dead fish or a dying fish.

In a preferred embodiment, the detection unit may be configured to detect a dead fish or a dying fish by applying a learned classification model generated by machine learning to an image captured by the camera.

In another preferred embodiment, the detection unit may be configured to detect a dead fish and a dying fish, and the notification unit may be configured, when the detection unit detects a dead fish, to notify the user terminal of the detection of a dead fish, and when the detection unit detects a dying fish, to notify the user terminal of the detection of a dying fish.

In a further preferred embodiment, the at least one camera unit may have a plate-like shape, the lens may be a fisheye lens, and the sending unit may be configured to send a fisheye image captured by the camera to the monitoring server.

In a further preferred embodiment, the monitoring server may further include a correction unit configured to perform distortion correction on a fisheye image captured by the camera to generate a rectangular image, and the detection unit may be configured to detect a dead fish or a dying fish based on a rectangular image generated by the correction unit.

In a further preferred embodiment, the at least one camera unit may further include: a white light; a blue or a red light; and a light control unit configured, when the camera captures an image, to selectively illuminate the white light or the blue or the red light depending on a weather.

In a further preferred embodiment, the at least one camera unit may further include a microphone, the sending unit may be configured to send an underwater sound collected by the microphone to the monitoring server, the monitoring server may further include a determination unit configured to determine whether a volume of an underwater sound sent by the sending unit exceeds a predetermined threshold, and a data acquisition unit configured, when the determination makes a positive determination, to send an image capture instruction to the at least one camera unit, and the sending unit may be configured, when the at least one camera unit receives an image capture instruction sent by the data acquisition unit, to send an image captured by the camera to the monitoring server.

In a further preferred embodiment, the detection unit may be further configured to detect a natural enemy fish of the fish raised in the fish preserve, and the notification unit may be further configured, when the detection unit detects a natural enemy fish, to notify the user terminal of the detection of a natural enemy fish.

In a further preferred embodiment, the monitoring server may further include a conversion unit configured, when the detection unit detects a natural enemy fish, to convert a position of the natural enemy fish on an image captured by the camera to a location in the fish preserve by use of a predetermined conversion table, and the notification unit may be further configured to notify the user terminal of a location in the fish preserve identified by the conversion unit.

In a further preferred embodiment, the at least one camera unit may include a first camera unit and a second camera unit, the conversion unit may be further configured, when the detection unit detects a dead fish, to convert a position of the dead fish on an image captured by the camera to a location in the fish preserve by use of the predetermined conversion table, and the notification unit may be configured to notify the user terminal of detection of a dead fish when a location of a dead fish in the fish preserve that is detected based on an image sent from the first camera unit and a location of a dead fish in the fish preserve that is detected based on an image sent from the second camera unit are included within a predetermined area.

A camera unit according to the present invention is to be fixed at a bottom of a fish preserve, the camera unit comprising: a camera having a lens that is to be directed to a water surface of the fish preserve; and a sending unit configured to send an image captured by the camera to a monitoring server.

### Effects of the Invention

The present invention makes it possible to monitor fish raised in a fish preserve.

### Brief Description of the Drawings

FIG. 1 is a diagram showing an example of a configuration of a fish monitoring system.
FIG. 2 is a diagram showing an example of an appearance of camera unit 1.
FIG. 3 is a block diagram showing an example of an electrical configuration of camera unit 1.
FIG. 4 is a block diagram showing an example of an electrical configuration of monitoring server 3.
FIG. 5 is a diagram showing an example of a rectangular image.
FIG. 6 is a block diagram showing an example of an electrical configuration of user terminal 4.
FIG. 7 is a sequence diagram showing an example of a real-time monitoring operation.
FIG. 8 is a sequence diagram showing an example of a periodic monitoring operation.

### Modes for Implementing the Invention

### 1. Embodiment

### 1-1. Configuration

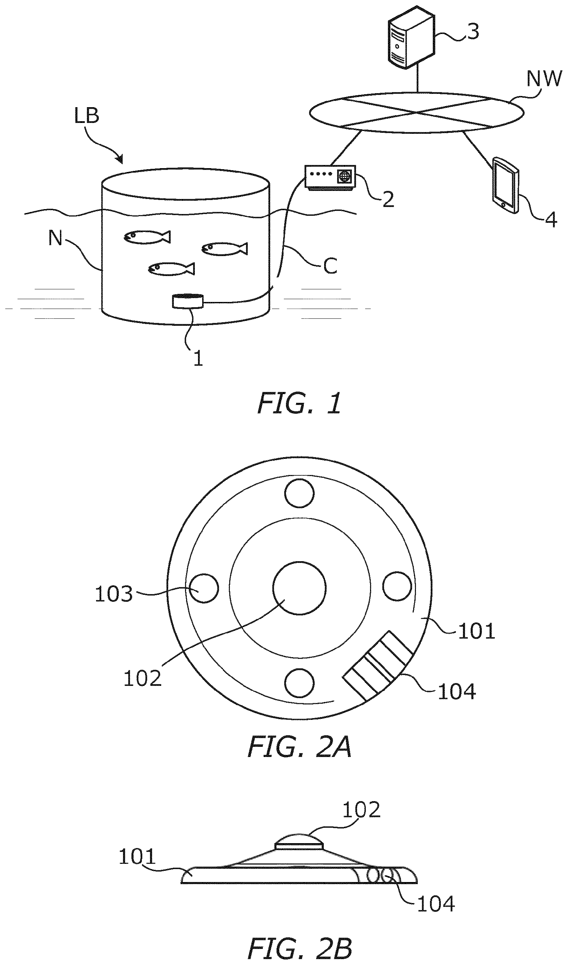

A fish monitoring system according to an embodiment of the present invention will be described with reference to the drawings. The fish monitoring system is a system for monitoring fish raised in a fish preserve. FIG. 1 is a diagram showing an example of a configuration of the fish monitoring system. The fish monitoring system shown in the figure includes camera unit 1 that is fixed at the center of the bottom of fish preserve LB, communication unit 2 that is placed above water and is connected to camera unit 1 via cable C, monitoring server 3 that is connected to communication unit 2 via communication network NW, and user terminal 4 that is connected to monitoring server 3 via communication network NW. Hereinafter, each component will be described.

Camera unit 1 is a device for capturing an underwater image. FIG. 2 is a diagram showing an example of an appearance of camera unit 1. FIG. 2(a) is a plan view, and FIG. 2(b) is a side view. Camera unit 1 shown in the figures includes disk-shaped housing 101 having an opening in the center of the upper surface, cover part 102 that covers the opening of the housing 101, four holes 103 provided at equal intervals along the outer edge of housing 101, and cable outlet 104 that opens on the side surface of housing 101. Of these components, housing 101 has an upper surface that is gently inclined upward from the edge towards the center opening. Cover part 102 is a hemispheric transparent resin for covering a fisheye lens. Housing 101 and cover part 102 have an algae-proof coating. The holes 103 are openings through which a hook is inserted for fixing camera unit 1 to aquaculture net N of fish preserve LB. Cable outlet 104 is an outlet into which cable C is inserted.

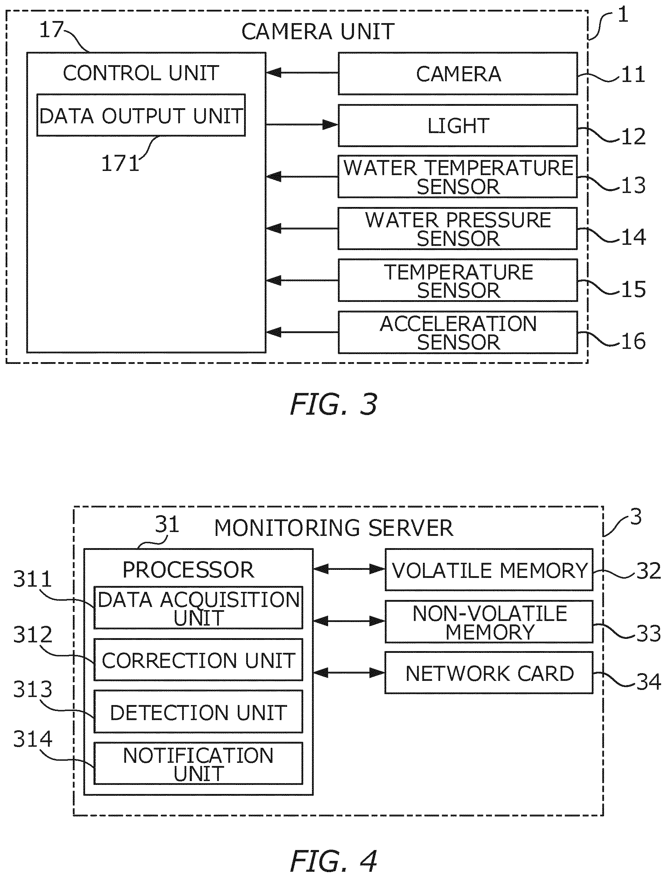

FIG. 3 is a block diagram showing an example of an electrical configuration of camera unit 1. Camera unit 1 shown in the figure includes camera 11, light 12, water temperature sensor 13, water pressure sensor 14, temperature sensor 15, acceleration sensor 16, and control unit 17. Of these components, camera 11 includes a fisheye lens that is disposed so as to face an axial direction of housing 101. When camera unit 1 is fixed horizontally on the seabed, the fisheye lens faces the sea surface. The fisheye lens has an angle of view of 180 degrees or more so that it can capture an image of an object that is located in a horizontal direction to camera unit 1 (in other words, an object placed on the seabed). Camera 11 can perform well-known shift shake correction based on values output from acceleration sensor 16, which correction mitigates image blurring that occurs when camera unit 1 is swayed by an ocean current. Light 12 is, specifically, a white LED light that is illuminated when camera 11 is used to capture an image. Temperature sensor 15 is a sensor for measuring a temperature inside housing 101 of camera unit 1. Control unit 17 includes a memory that stores a control program, and a microprocessor for executing the control program. Execution of the control program by the microprocessor provides camera unit 1 with a function of data output unit 171.

Data output unit 171 is configured, upon receiving a data output instruction from monitoring server 3, to illuminate light 12, to output an image capture instruction to camera 11, and to acquire image data representing a video captured by camera 11. Data output unit 171 is also configured to acquire water temperature data from water temperature sensor 13, to acquire water pressure data from water pressure sensor 14, and to acquire in-housing temperature data from temperature sensor 15. Data output unit 171 is further configured to generate sensor data including acquired items of data, and to output the sensor data to communication unit 2 for transmission to monitoring server 3.

Communication unit 2 is a communication device for enabling data communication between camera unit 1 and monitoring server 3. Communication unit 2 is connected to camera unit 1 via cable C, which includes a communication cable and a power cable. Communication unit 2 includes a battery to supply power to camera unit 1 via the power cable. Communication unit 2 is connected to monitoring server 3 via communication network NW, which is a mobile communication network, the Internet, or a combination thereof.

Monitoring server 3 is a device for receiving sensor data from camera unit 1 and for sending the sensor data or an analysis of the sensor data to user terminal 4. FIG. 4 is a block diagram showing an example of an electrical configuration of monitoring server 3. Monitoring server 3 shown in the figure includes processor 31 such as a CPU, volatile memory 32 such as a DRAM, non-volatile memory 33 such as an HDD, and network card 34. Of these components, processor 31 can execute a control program stored in non-volatile memory 33. Execution of the control program by processor 31 provides monitoring server 3 with functions of data acquisition unit 311, correction unit 312, detection unit 313, and notification unit 314.

Of these functions, data acquisition unit 311 is configured to send a data output instruction to communication unit 2 periodically or in response to a data acquisition instruction sent from user terminal 4. Data acquisition unit 311 is also configured to acquire sensor data output from camera unit 1.

Correction unit 312 is configured to extract image data from sensor data that is acquired by data acquisition unit 311. The image data to be extracted by correction unit 312 represents a circular fisheye image. Correction unit 312 is also configured to perform well-known distortion correction on the circular fisheye image to generate a rectangular image.

Detection unit 313 is configured to acquire a rectangular image generated by correction unit 312, and to apply a classifier (in other words, a learned classification model), which is generated by machine learning, to the rectangular image to detect a dead fish or a dying fish. The classifier applied by detection unit 313 is generated by causing a classification model to learn features of positive example data and negative example data of dead fish and dying fish. The negative example data learned by the classification mode is, in other words, positive example data of normal live fish. The features learned by the classification mode are, for example, Harr-like features, LBP features, or HOG features.

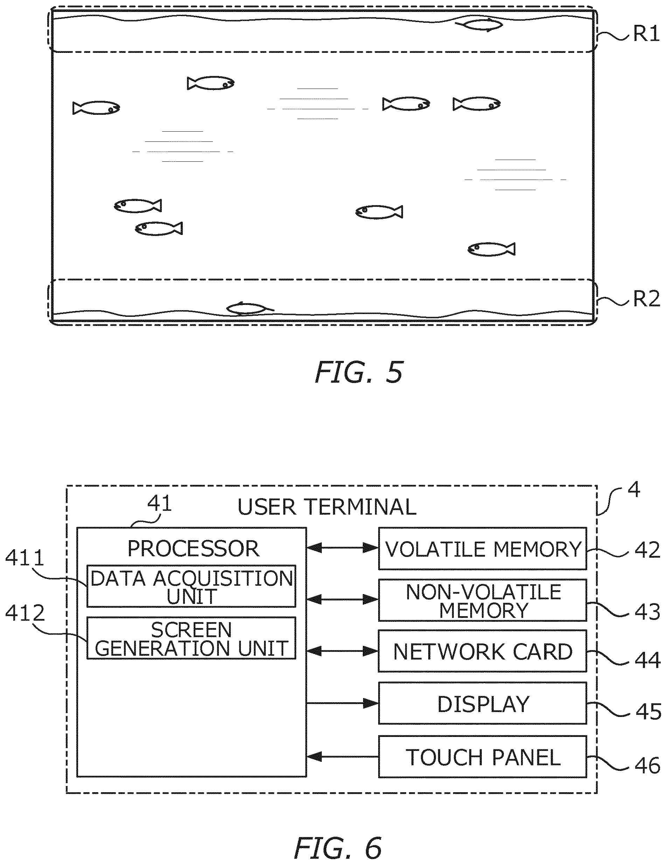

A dead fish tends to lie prone or lie on its back on the seabed. A dying fish tends to be in a lying down position or be turned upside down on the seabed and moving slightly while opening and closing its gill covers. In view of the aforementioned tendencies, detection unit 313 is configured to detect a dead fish or a dying fish only from the upper area and the lower area, which correspond to an area near the seabed, of a rectangular image generated by correction unit 312. FIG. 5 is a diagram showing an example of a rectangular image generated by correction unit 312. In the case of the shown rectangular image, detection unit 313 detects a dead fish or a dying fish only from areas R1 and R2, which correspond to an area near the seabed. This narrowing of a detection area reduces a possibility of errors occurring in detection.

When detection unit 313 detects a dead fish or a dying fish, the unit performs object tracking to calculate a movement distance of the detected fish. When the calculated movement distance is lesser or equal to a first threshold, detection unit 313 determines that the detected fish is a dead fish. When the calculated movement distance is lesser or equal to a second threshold, detection unit 313 determines that the detected fish is a dying fish. The first threshold compared with the calculated movement distance refers to a predetermined threshold for use in detecting a dead fish, which threshold is determined in consideration of a distance at which a dead fish is moved by an ocean current. The second threshold compared with the calculated movement distance refers to a predetermined threshold for use in detecting a dying fish, which threshold is set to a value higher than the first threshold.

Notification unit 314 is configured, after sensor data is acquired from camera unit 1 in accordance with an instruction provided by user terminal 4, to generate sensor data including data on a rectangular image generated by correction unit 312, instead of a fisheye image, and to send the sensor data to user terminal 4. Notification unit 314 is also configured, when detection unit 313 detects a dead fish from a periodically acquired fisheye image, to send a dead-fish detection notification to user terminal 4. Notification unit 314 is also configured, when detection unit 313 detects a dying fish from a periodically acquired fisheye image, to send a dying-fish detection notification to user terminal 4.

User terminal 4 is a communication terminal to be used by a manager of fish preserve LB. User terminal 4 is used for receiving sensor data and notifications from monitoring server 3. User terminal 4 is, specifically, a smartphone or a PC, for example. FIG. 6 is a block diagram showing an example of an electrical configuration of user terminal 4. User terminal 4 shown in the figure includes processor 41 such as a CPU, volatile memory 42 such as a DRAM, non-volatile memory 43 such as a flash memory, network card 44, display 45 such as a liquid crystal display, and touch panel 46. Of these components, processor 41 can execute a control program stored in non-volatile memory 43. Execution of the control program by processor 41 provides user terminal 4 with functions of data acquisition unit 411 and screen generation unit 412.

Data acquisition unit 411 is configured, upon receiving a user's instruction to display sensor data, to send data acquisition instruction to monitoring server 3, and to acquire sensor data sent from monitoring server 3. Data acquisition unit 411 is also configured to acquire a dead-fish detection notification or a dying-fish detection notification sent from monitoring server 3.

Screen generation unit 412 is configured to generate a sensor data display screen based on sensor data acquired by data acquisition unit 411, and to cause display 45 to display the screen. The screen displayed on display 45 shows an underwater image of fish preserve LB, a water temperature, a water pressure, and an in-housing temperature of camera unit 1. Of these display elements, the underwater image is a part of a rectangular image included in the sensor data. A user of user terminal 4 can view the entire rectangular image by performing a pan, tilt, or zoom operation. Screen generation unit 412 is also configured to generate a dead-fish detection notification screen based on a dead-fish detection notification acquired by data acquisition unit 411, and to cause display 45 to display the screen. Screen generation unit 412 is also configured to generate a dying-fish detection notification screen based on a dying-fish detection notification acquired by data acquisition unit 411, and to cause display 45 to display the screen.

1-2. Operation

Operations of the fish monitoring system will be described below. Specifically, a real-time monitoring operation that is carried out in response to an instruction of a user of user terminal 4, and a periodic monitoring operation that is automatically carried out regardless of an instruction of a user of user terminal 4 will be described.

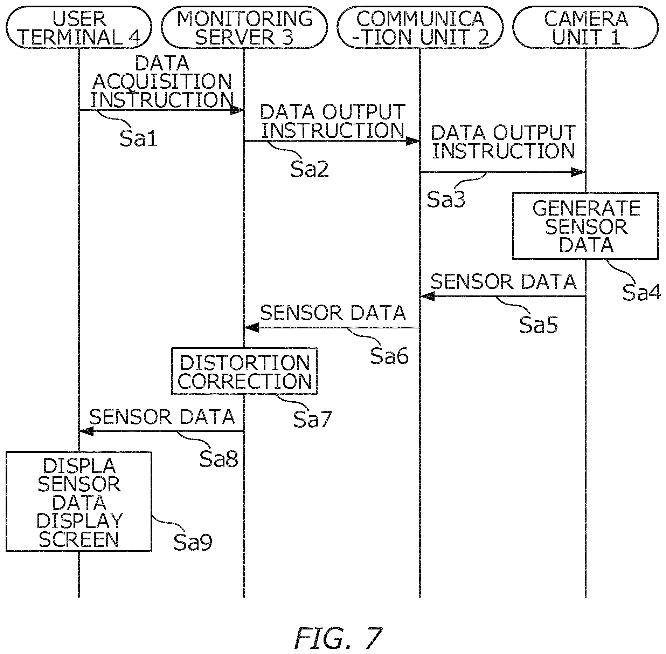

FIG. 7 is a sequence diagram showing an example of the real-time monitoring operation.

When a user of user terminal 4 inputs an instruction to display sensor data, data acquisition unit 411 of user terminal 4 sends a data acquisition instruction to monitoring server 3 (step Sa1). When data acquisition unit 311 of monitoring server 3 receives the data acquisition instruction from user terminal 4, the unit sends a data output instruction to communication unit 2 (step Sa2). When data output unit 171 of camera unit 1 receives the data output instruction via communication unit 2 (step Sa3), the unit illuminates light 12, outputs an image capture instruction to camera 11, and to acquire image data representing a video captured by camera 11. Data output unit 171 also acquires water temperature data from water temperature sensor 13, acquires water pressure data from water pressure sensor 14, and acquires in-housing temperature data from temperature sensor 15. After acquiring those items of data, data output unit 171 generates sensor data including the items of data (step Sa4), and outputs the sensor data to communication unit 2 for transmission to monitoring server 3 (step Sa5).

Data acquisition unit 311 of monitoring server 3 acquires the sensor data via communication unit 2 (step Sa6). Correction unit 312 of monitoring server 3 extracts image data representing a circular fisheye image from the sensor data, and performs well-known distortion correction on the circular fisheye image to generate a rectangular image (step Sa7). Notification unit 314 of monitoring server 3 generates sensor data including data on the rectangular image, instead of the fisheye image, and sends the sensor data to user terminal 4 (step Sa8).

Data acquisition unit 411 of user terminal 4 acquires the sensor data sent from monitoring server 3. Screen generation unit 412 of user terminal 4 generates a sensor data display screen based on the sensor data, and causes display 45 to display the screen (step Sa9). The screen displayed on display 45 shows an underwater image of fish preserve LB, a water temperature, a water pressure, and an in-housing temperature of camera unit 1. This screen shows the user of user terminal 4 a current environment of fish preserve LB.

The foregoing is a description of the real-time monitoring operation.

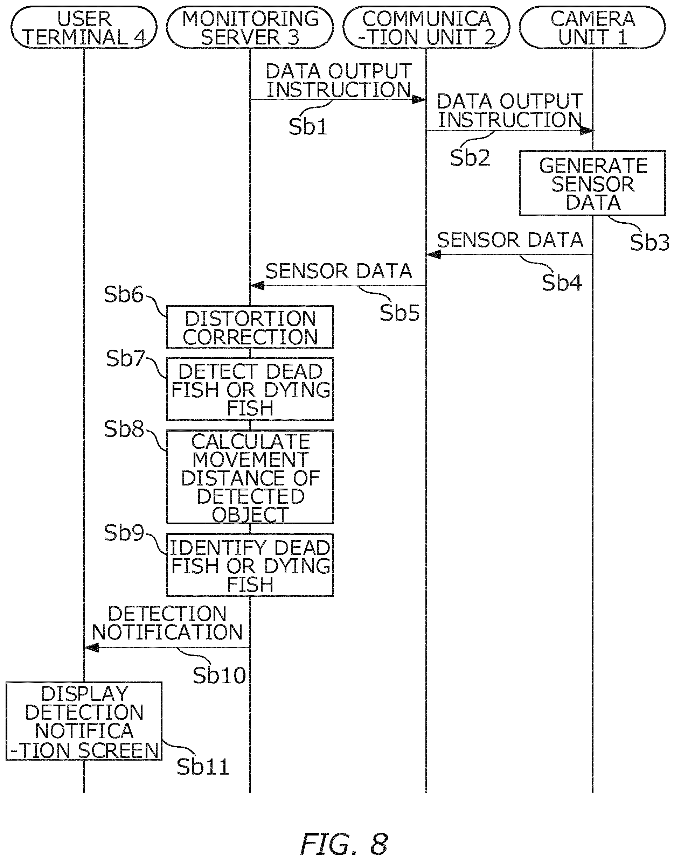

FIG. 8 is a sequence diagram showing an example of the periodic monitoring operation.

Data acquisition unit 311 of monitoring server 3 periodically sends a data output instruction to communication unit 2 (step Sb1). When data output unit 171 of camera unit 1 receives the data output instruction via communication unit 2 (step Sb2), the unit illuminates light 12, outputs an image capture instruction to camera 11, and to acquire image data representing a video captured by camera 11. Data output unit 171 also acquires water temperature data from water temperature sensor 13, acquires water pressure data from water pressure sensor 14, and acquires in-housing temperature data from temperature sensor 15. After acquiring those items of data, data output unit 171 generates sensor data including the items of data (step Sb3), and outputs the sensor data to communication unit 2 for transmission to monitoring server 3 (step Sb4).

Data acquisition unit 311 of monitoring server 3 acquires the sensor data via communication unit 2 (step Sb5). Correction unit 312 of monitoring server 3 extracts image data representing a circular fisheye image from the sensor data, and performs well-known distortion correction on the circular fisheye image to generate a rectangular image (step Sb6). Detection unit 313 of monitoring server 3 applies the classifier to the rectangular image to detect a dead fish or a dying fish (step Sb7). When detection unit 313 detects a dead fish or a dying fish, the unit performs object tracking to calculate a movement distance of the detected fish (step Sb8). When the calculated movement distance is lesser or equal to the first threshold, detection unit 313 determines that the detected fish is a dead fish (step Sb9). When the calculated movement distance is lesser or equal to the second threshold, detection unit 313 determines that the detected fish is a dying fish (step Sb9). When detection unit 313 detects a dead fish, notification unit 314 of monitoring server 3 sends a dead-fish detection notification to user terminal 4 (step Sb10). When detection unit 313 detects a dying fish, notification unit 314 sends a dying-fish detection notification to user terminal 4 (step Sb10).

Data acquisition unit 411 of user terminal 4 acquires a dead-fish detection notification or a dying-fish detection notification sent from monitoring server 3. When data acquisition unit 411 acquires a dead-fish detection notification, screen generation unit 412 of user terminal 4 causes display 45 to display a dead-fish detection notification screen (step Sb11). When data acquisition unit 411 acquires a dying-fish detection notification, screen generation unit 412 causes display 45 to display a dying-fish detection notification screen (step Sb11). The user of user terminal 4, by receiving the dead-fish detection notification, can quickly remove the dead fish from fish preserve LB, so spread of diseases from the dead fish in fish preserve LB is prevented. Also, the user of user terminal 4, by receiving the dying-fish detection notification, can catch and sell the fish before the fish dies.

The foregoing is a description of the periodic monitoring operation.

### 2. Modifications

The above embodiment may be modified as described below. Modifications described below may be combined with each other.

### 2-1. Modification 1

The above fish monitoring system is a system for monitoring fish; however, the system may be used to monitor an aquatic animal other than fish.

### 2-2. Modification 2

Camera unit 1 may be fixed at a place other than the center of the bottom of fish preserve LB. For example, camera unit 1 may be fixed at the side surface of cylindrical aquaculture net N having a bottom.

### 2-3. Modification 3

Camera unit 1 is not necessarily limited to the example shown in FIG. 2. Shapes, materials, numbers, and arrangement of components of camera unit 1 may be changed depending on an environment where a camera unit is used.

### 2-4. Modification 4

Camera unit 1 may be configured to wirelessly communicate with communication unit 2 by use of a well-known underwater communication technology.

Camera unit 1 may be configured to communicate directly with monitoring server 3 by use of a well-known underwater communication technology.

### 2-5. Modification 5

Camera unit 1 may be mounted with a lens other than the fisheye lens. For example, camera unit 1 may be mounted with a standard lens having an angle of view of 40 to 60 degrees. In that case, the lens is disposed in camera unit 1 such that the unit, when fixed in the sea, can capture an image of an area near the seabed.

### 2-6. Modification 6

Light 12 of camera unit 1 may be configured to emit a light of a color other than white. A color of a light emitted by light 12 may be determined depending on an environment of fish preserve LB and habits of fish raised in fish preserve LB.

Camera unit 1 may be provided with lights of different colors, and may be configured to switch the lights in accordance with a situation. For example, camera unit 1 may be further provided with a blue or a red LED light, which has resistance to attenuation in muddy water, and may be configured to use a white LED light when it is sunny or cloudy, and to use the blue or the red LED light when it is raining. In that case, monitoring server 3 is configured to send weather information to camera unit 1, together with a data output instruction, and camera unit 1 is configured to select a color of the light to be used based on the weather information.

### 2-7. Modification 7

Camera unit 1 may be configured to send an output value of acceleration sensor 16 to monitoring server 3 as sensor data. In that case, monitoring server 3 may be configured to detect a tilt of camera unit 1 based on an output value of acceleration sensor 16, and to determine whether the detected tilt exceeds a predetermined threshold, which is set to an appropriate value (for example, plus or minus 45 degrees) for detecting a turning over of camera unit 1. Monitoring server 3 may also be configured, when determining that the detected tilt exceeds the predetermined threshold, to send a turnover notification to user terminal 4. A user of user terminal 4, by receiving the turnover notification, can see that camera unit 1 has turned over.

2-8. Modification 8

Detection unit 313 of monitoring server 3 is configured to narrow down a detection area in a rectangular image for improvement of detection accuracy; however, narrowing down of a detection area may be omitted. Detection unit 313 may be configured to detect a dead fish or a dying fish from an entire rectangular image.

### 2-9. Modification 9

A dying fish tends to open and close its gill covers, unlike a dead fish. In view of the tendency, a dying fish may be distinguished from a dead fish by focusing on a movement of its gill covers. Specifically, to improve accuracy in distinguishing a dying fish from a dead fish, detection unit 313 of monitoring server 3 may be configured, after detecting a dead fish as a result of object tracking, to detect movement of gill covers of the fish. Detection unit 313 may also be configured, when the detected movement matches a predetermined pattern for detecting a dying fish, to determine that the fish is a dying fish, and when the detected movement does not match the predetermined pattern, to determine that the fish is a dead fish.

### 2-10. Modification 10

In a case where a certain type of fish is raised in fish preserve LB, whose state (being dead or dying) can be identified based on a still image, object tracking may be omitted. In that case, detection unit 313 of monitoring server 3 may be configured to acquire a rectangular image generated by correction unit 312, and to apply a classifier (in other words, a learned classification model), which is generated by machine learning, to the rectangular image to detect a dead fish or a dying fish. The classifier applied by detection unit 313 is generated by causing a classification model to learn features of positive example data of dead fish, positive example data of dying fish, and positive example data of normal live fish. The features learned by the classification mode are, for example, Harr-like features, LBP features, or HOG features.

### 2-11. Modification 11

Detection unit 313 of monitoring server 3 does not necessarily need to be capable of detecting both a dead fish and a dying fish. Depending on the needs of a user of the fish monitoring system, detection unit 313 may be configured to detect either one of a dead fish or a dying fish.

### 2-12. Modification 12

Fish preserve LB may be invaded by a natural enemy fish (for example, a shark) of fish raised there. If the natural enemy fish is left unattended, the fish may prey on the fish raised in fish preserve LB. In view of the possibility, monitoring server 3 may be configured to detect entry of a natural enemy fish, and to send a notice to user terminal 4. In that case, detection unit 313 of monitoring server 3 may be configured to acquire a rectangular image generated by correction unit 312, and to apply a classifier (in other words, a learned classification model), which is generated by machine learning, to the rectangular image to detect a dead fish, a dying fish, or a natural enemy fish. The classifier applied by detection unit 313 is generated by causing a classification model to learn features of positive example data of dead fish and dying fish, positive example data of natural enemy fish, and positive example data of normal live fish. The features learned by the classification mode are, for example, Harr-like features, LBP features, or HOG features. Notification unit 314 of monitoring server 3 may be configured, when detection unit 313 detects a natural enemy fish, to send a natural-enemy-fish detection notification to user terminal 4. A user of user terminal 4, by receiving the natural-enemy-fish detection notification, can see an entry of the natural enemy fish.

A natural enemy fish typically invades fish preserve LB through a breach in aquaculture net N. Such a breach needs to be repaired to prevent invasion of another natural enemy fish and the escape of raised fish. To facilitate the repair work, monitoring server 3, upon detecting a natural enemy fish, may notify a user of user terminal 4 of a location at which the natural enemy fish has been detected, which location is considered to be close to a breach through which the natural enemy fish has entered fish preserve LB. In that case, monitoring server 3 is configured, when monitoring unit 313 detects a natural enemy fish, to identify a location of the natural enemy fish in preserve LB. Specifically, monitoring server 3 performs the positioning by converting a position of the natural enemy fish in a rectangular image to a location in preserve LB by use of a predetermined conversion table, which is a table in which a set of plane coordinates on a rectangular image and a size of a fish appearing in a rectangular image is associated with spatial coordinates in fish preserve LB. Notification unit 314 of monitoring server 3 is configured, after a location of a natural enemy fish in fish preserve LB is identified using the conversion table, to send a natural-enemy-fish detection notification indicative of the identified location to user terminal 4. A user of user terminal 4, by receiving the natural-enemy-fish detection notification, can know a location in fish preserve LB that is considered to be close to a breach through which a natural enemy fish has entered fish preserve LB.

### 2-13. Modification 13

A natural enemy fish is typically larger in size than raised fish, so the natural enemy fish makes a louder noise when it swims than the raised fish. In view of the difference in loudness of a swimming noise, camera unit 1 may be provided with a microphone, and monitoring server 3 may be configured, when the microphone has collected a swimming noise of a natural enemy fish, to start the detection process described in section "Modification 12." This modification reduces the frequency of the detection process, so that camera unit 1 consumes less power for image capturing. In the present modification, specifically, data output unit 171 of camera unit 1 is configured to receive a sound data output instruction periodically sent from monitoring server 3, and to send, in response, data on an underwater sound collected by the microphone to monitoring server 3. Monitoring server 3 is configured to determine whether a volume of sound data sent from camera unit 1 exceeds a predetermined threshold for detecting a swimming noise of a natural enemy fish. Data acquisition unit 311 of monitoring server 3 is configured, when it is determined that a volume of sound data exceeds the predetermined threshold, to acquire sensor data from camera unit 1. The sensor data acquired by data acquisition unit 311 includes image data that is to be subject to the detection process.

### 2-14. Modification 14

Functions of camera unit 1, monitoring server 3, and user terminal 4 may be distributed appropriately depending on an environment where the present invention is implemented. For example, monitoring server 3 may generate screens, instead of screen generation unit 412 of user terminal 4, and cause user terminal 4 to display the screens.

### 2-15. Modification 15

A plurality of camera units 1 may be used in fish preserve LB. In a case where a plurality of camera units 1 are used to improve accuracy in detecting a dead fish, monitoring server 3 may be configured, when detecting a dead fish from images captured by plural camera units 1, to determine that a dead fish has been detected. Assuming a case where two camera units 1A and 1B are used, monitoring server 3 is configured, when detecting a dead fish from a rectangular image captured by camera unit 1A, to convert a position of the dead fish on the rectangular image to a location in fish preserve LB by use of the conversion table described in section "Modification 12." It is of note that in the conversion table, spatial coordinates in fish preserve LB are pre-determined based on a fixed position of camera unit 1A. Monitoring server 3 is also configured, when detecting a dead fish from a rectangular image captured by camera unit 1B, to convert a position of the dead fish on the rectangular image to a location in fish preserve LB by use of the conversion table described in section "Modification 12." It is of note that in the conversion table, spatial coordinates in fish preserve LB are pre-determined based on a fixed position of camera unit IB. Monitoring server 3 is further configured to determine whether the identified two locations are included within a predetermined range, and to determine, when the determination is positive, that an identical fish has been detected and that a dead fish has been detected.

It is of note that in the foregoing description a plurality of camera units 1 are used to detect a dead fish; however, a plurality of camera units 1 may be used to detect a dying fish or a natural enemy fish for improvement of accuracy of detection.

### 2-16. Modification 16

Distortion correction performed by correction unit 312 may be omitted.

### 2-17. Modification 17

Detection unit 313 may be configured to detect a dead fish and/or a dying fish in a manner in which a classifier generated by machine learning is not used.

### Description of the Reference Numerals

1 ... camera unit, 2 ... communication unit, 3 ... monitoring server, 4 ... user terminal, 11 ... camera, 12 ... light, 13 ... water temperature sensor, 14 ... water pressure sensor, 15 ... temperature sensor, 16 ... acceleration sensor, 17 ... control unit, 31 ... processor, 32 ... volatile memory, 33 ... non-volatile memory, 34 ... network card, 41 ... processor, 42 ... volatile memory, 43 ... non-volatile memory, 44 ... network card, 45 ... display, 46 ... touch panel, 101 ... housing, 102 ... cover part, 103 ... hole, 104 ... cable outlet, 171 ... data output unit, 311 ... data acquisition unit, 312 ... correction unit, 313 ... detection unit, 314 ... notification unit, 411 ... data acquisition unit, 412 ... screen generation unit, LB ... fish preserve, C ... cable, N ... aquaculture net, NW ... communication network, R ... detection area

## Claims

1. A fish monitoring system for monitoring fish raised in a fish preserve, comprising:
at least one camera unit fixed at a bottom of the fish preserve;
a monitoring server connected to the at least one camera unit via a communication network;
a user terminal connected to the monitoring server via the communication network, wherein:
the at least one camera unit includes a camera having a lens that is to be directed to a water surface of the fish preserve, and a sending unit configured to send an image captured by the camera to the monitoring server; and
the monitoring server includes a detection unit configured to detect a dead fish or a dying fish based on an image captured by the camera, and a notification unit configured, when the detection unit detects a dead fish or a dying fish, to notify the user terminal of the detection of a dead fish or a dying fish.

2. The fish monitoring system according to Claim 1, wherein the detection unit is configured to detect a dead fish or a dying fish by applying a learned classification model generated by machine learning to an image captured by the camera.

3. The fish monitoring system according to Claim 1, wherein:
the detection unit is configured to detect a dead fish and a dying fish; and
the notification unit is configured, when the detection unit detects a dead fish, to notify the user terminal of the detection of a dead fish, and when the detection unit detects a dying fish, to notify the user terminal of the detection of a dying fish.

4. The fish monitoring system according to any one of Claims 1 to 3, wherein:
the at least one camera unit has a plate-like shape;
the lens is a fisheye lens; and
the sending unit is configured to send a fisheye image captured by the camera to the monitoring server.

5. The fish monitoring system according to Claim 4, wherein:
the monitoring server further includes a correction unit configured to perform distortion correction on a fisheye image captured by the camera to generate a rectangular image; and
the detection unit is configured to detect a dead fish or a dying fish based on a rectangular image generated by the correction unit.

6. The fish monitoring system according to any one of Claims 1 to 5, wherein the at least one camera unit further includes:
a white light;
a blue or a red light; and
a light control unit configured, when the camera captures an image, to selectively illuminate the white light or the blue or the red light depending on a weather.

7. The fish monitoring system according to any one of Claims 1 to 6, wherein:
the at least one camera unit further includes a microphone;
the sending unit is configured to send an underwater sound collected by the microphone to the monitoring server;
the monitoring server further includes a determination unit configured to determine whether a volume of an underwater sound sent by the sending unit exceeds a predetermined threshold, and a data acquisition unit configured, when the determination makes a positive determination, to send an image capture instruction to the at least one camera unit; and
the sending unit is configured, when the at least one camera unit receives an image capture instruction sent by the data acquisition unit, to send an image captured by the camera to the monitoring server.

8. The fish monitoring system according to any one of Claims 1 to 7, wherein:
the detection unit is further configured to detect a natural enemy fish of the fish raised in the fish preserve; and
the notification unit is further configured, when the detection unit detects a natural enemy fish, to notify the user terminal of the detection of a natural enemy fish.

9. The fish monitoring system according to Claim 8, wherein:
the monitoring server further includes a conversion unit configured, when the detection unit detects a natural enemy fish, to convert a position of the natural enemy fish on an image captured by the camera to a location in the fish preserve by use of a predetermined conversion table; and
the notification unit is further configured to notify the user terminal of a location in the fish preserve identified by the conversion unit.

10. The fish monitoring system according to Claim 9, wherein:
the at least one camera unit includes a first camera unit and a second camera unit;
the conversion unit is further configured, when the detection unit detects a dead fish, to convert a position of the dead fish on an image captured by the camera to a location in the fish preserve by use of the predetermined conversion table; and
the notification unit is configured to notify the user terminal of detection of a dead fish when a location of a dead fish in the fish preserve that is detected based on an image sent from the first camera unit and a location of a dead fish in the fish preserve that is detected based on an image sent from the second camera unit are included within a predetermined area.

11. A camera unit to be fixed at a bottom of a fish preserve, comprising:
a camera having a lens that is to be directed to a water surface of the fish preserve; and
a sending unit configured to send an image captured by the camera to a monitoring server.
